# NEW EUROPEAN PATENT SPECIFICATION

(11) **EP 0 906 319 B2**
(45) Date of publication and mention of the opposition decision: **06.12.2006**
(45) Mention of the grant of the patent: 18.07.2001
(21) Application number: 97917847.2
(22) Date of filing: 02.04.1997
(51) Int. Cl.: C07F 5/06

(54) **PROCESS FOR MAKING ALUMINOXANES**
VERFAHREN ZUR HERSTELLUNG VON ALUMINOXANEN
PROCEDE DE FABRICATION D'ALUMINOXANES

(30) Priority: 19.04.1996 US 635358; 15.07.1996 US 680087
(43) Date of publication of application: 07.04.1999
(73) Proprietor: ALBEMARLE CORPORATION, Baton Rouge, LA 70801-1765 (US)
(72) Inventor: ROBERG, John, K., Baton Rouge, LA 70806 (US); FARRITOR, Robert, E., Geneva, IL 60134 (US); BURT, Edward, A., Lexington, SC 29072 (US)
(74) Representative: UEXKÜLL & STOLBERG
(86) International application number: PCT/US1997/005554
(87) International publication number: WO 1997/040053

(56) References cited:
- EP-A- 0 405 221
- EP-A- 0 460 741
- EP-A- 0 623 624
- EP-A1- 0 372 483
- EP-B1- 0 442 300
- US-A- 3 996 012
- US-A- 4 924 018
- US-A- 5 041 585
- US-A- 5 248 801
- US-A- 5 427 992
- US-A- 5 599 964
- U. Onken et al."Chemische Prozesskunde", Georg Thieme Verlag, Stuttgart 1996, page 145
- E. Fitzer et al. "Technische Chemie. Einführung in die chemische Reaktionstechnik", Springer-Verlag, 4th ed. pages 49-49,61,62,64

## Description

### TECHNICAL FIELD

This invention relates to the production of alkylaluminoxanes by use of a novel cost-effective process which makes it possible to operate with no significant yield losses. More specifically this invention relates to an Improved process for making aluminoxanes by the addition of free water to hydrocarbylaluminum compounds such as trimethylaluminum.

### BACKGROUND

Aluminoxanes are of commercial importance as components used in forming polymerization and oligomerization catalysts. They are formed by controlled hydrolysis of aluminum alkyls such as trimethylaluminum. While the hydrolysis can be effected by use of hydrated crystalline salts such as the pentahydrate of copper sulfate or the like, this approach can lead to the presence in the product of small amounts of metal residues which can act as catalyst poisons. Thus the use of water itself to effect controlled hydrolysis of the aluminum alkyl in a hydrocarbon medium has proven to be the preferred general approach.

Over the years considerable effort has been devoted to processes for conducting such controlled hydrolysis using water as the hydrolytic reagent. For example, Vandenberg, U.S. 3,219,591 reported the catalytic activity of compounds formed by the reaction of trialkylaluminum with limited amounts of water in the polymerization of epichlorohydrin and otheroxiranes. Shortly thereafter, Manyik, et al. U.S. 3,242,099 reported the use of aluminoxanes, made by reacting 0.85 - 1.05 moles of water with hydrocarbylaluminum compounds such as triisobutylaluminum, as co-catalysts with certain transition metal compounds in the polymerization of mono-unsaturated alphaolefins; e.g. ethylene and propylene. Isobutylaluminoxane was also made by adding an equal mole quantity of water to a heptane solution of triisobutylaluminum.

Manyik, et al. U.S. 3,300,458 describe preparing alkylaluminoxane by passing a hydrocarbon through water to form a wet hydrocarbon and mixing the wet hydrocarbon and an alkyl aluminum/hydrocarbon solution in a conduit. Manyik, et al. in Journal of Catalysis Volume 47 published in 1977, at pages 197-209, refer to studies with catalysts formed from certain chromium compounds and partially hydrolyzed triisobutylaluminum.

Schoenthal, et al. U.S. 4,730,071 shows the preparalion of methylaluminoxane by dispersing water in toluene using an ultrasonic bath to cause the dispersion and then adding a toluene solution of trimethylaluminum to the dispersion. Schoenthal, et al. U.S. 4,730,072 is similar except it uses a high speed, high shear-inducing impeller to form the water dispersion.

Edwards, et al. U.S. 4,772,736 describes an aluminoxane preparation process in which water is introduced below the surface of a solution of hydrocarbylaluminum adjacentto a stirrer which serves to immediately disperse the water in the hydrocarbon solution.

Bottelberghe U.S. 4,908,463 describes an aluminoxane preparation process in which a static mixer is used to disperse water in a solvents and then impinges the water dispersion with a hydrocarbylaluminum solution in a T-shaped reactor. The solution is then removed to a finished reaction vessel which is stirred and can have a cooling means such as a heat-exchanger in an external pump-around loop.

Bottelberghe U.S. 4,924,018 describes formation of aluminoxanes by feeding a hydrocarbon solution of aluminum alkyl to a reaction zone, feeding an emulsion of 0.5-10 weight percent water in an inert solvent to the reaction zone, the ratio of moles of water to aluminum atoms being 0.4-1:1, and removing reaction mixture from the reaction zone to maintain a constant liquid level therein. The feeds are controlled so that the average residence time in the reaction zone is no more than about one hour.

Smith, Jr., et al. U.S. 4,937,363 discloses forming aluminoxanes by forming in a column a thin falling film of a solution of aluminum alkyl in an inert solvent while passing an upward countercurrent flow of wet inert gas through the column.

Davis U.S. 4,968,827 teaches introducing water into the free space above the surface of a cold (-80°C up to -10°C) solution of hydrocarbylaluminum compound in a liquid hydrocarbon which is being intensively agitated.

Deavenport, et al. U.S. 5,041,585 and 5,206,401 teach preparation of aluminoxanes by contacting an organic solvent containing trialkylaluminum with atomized water. Preformed aluminoxane can be included in the solution as reaction moderator.

Becker et al. U.S. 5,403,942 and Graefe et al. U.S. 5,427,992 describe batch processes for preparing aluminoxanes by injecting water into trialkylaluminum solutions using respectively, a jet loop reactor and a rotor/stator machine to mix the water and trialkylaluminum.

U.S. 4,960,878; 5,041,584 and 5,086,024 also describe processes in which water and certain organoaluminum compounds are caused to interact.

Despite all such intensive study and research, a need exists for practical, commercially-feasible process technology capable of producing concentrated aluminoxane solutions with no significant yield losses, especially where such technology can be applied both to batch and to continuous modes of operation. This invention is deemed to fulfill the foregoing need in a highly efficient manner.

A problem associated with the direct addition of free water to solvent solution of hydrocarbylalu minum in order to form aluminoxanes is plugging of the orifice of the water delivery system. This is caused by local over oxidation of the hydrocarbylaluminum to form insoluble products and can occur even when using a solution or dispersion of water in solvent. The plugging problem requires the orifice to be periodically cleaned which interrupts the aluminoxane production process. A method for reducing or eliminating the plugging problem has also been found.

### SUMMARY OF THE INVENTION

The present invention is applicable to, and constitutes improvements in, processes wherein water, hydrocarbylaluminum, and organic solvent are used in forming hydrocarbylaluminoxane. In accordance with this invention the feeds of these materials to the reactor are controlled to form a dilute reaction product mixture which is then processed so as to form at least two product mixtures, one of which consists essentially of hydrocarbylaluminum dissolved in organic solvent, and another of which is a concentrated solution of organoaluminum compounds (i.e., a mixture consisting essentially of hydrocarbylaluminum and hydrocarbylaluminoxane) in organic solvent in which the amount aluminoxane far exceeds the amount of hydrocarbylaluminum therein. As used herein, the term "hydrocarbylaluminum" is distinct from and does not include "aluminoxane" or "hydrocarbylaluminoxane".

According to one embodiment of the invention there is process wherein trimethylaluminum, water and organic solvent are fed to a reactor to form methylaluminoxane, said process comprising (a) feeding such materials to the reactor under temperature conditions and in proportions that form a solution containing in the range of 0.5 to 15 wt.% of aluminum as trimethylaluminum and methylaluminoxane, and wherein for each mole part of aluminum in the solution, there is in the solution in the range of 0.1 to 0.9 mole part of trimethylaluminum, said trimethylaluminum and said water are combined in proportions to provide 2.0 to 5.0 moles of trimethylaluminum per mole of water; and (b) separating the solution into a first portion consisting essentially of 0.5 to 15 wt.% of aluminum as trimethylaluminum dissolved in organic solvent, and a second portion consisting essentially of 3 to 20 wt.% of total aluminum as methylaluminoxane and trimethylaluminum, and wherein for each mole part of aluminum in solution in said second portion, there is in the range of no more than 0.03 to 0.3 mole part of trimethylaluminum.

In accordance with can other embodiment of this invention the improvement comprises (a) feeding hydrocarbylaluminum, an organic solvent, and waterto a reactor under temperature conditions and in proportions that form a solution containing in the range of 0.5 to 15 wt% of aluminum as hydrocarbylaluminum and hydrocarbylaluminoxane, and wherein for each mole part of aluminum in the solution, there is in the solution in the range of 0.1 to 0.9 mole part of hydrocarbylaluminum; and (b) separating the solution into a first portion consisting essentially of 0.5 to 15 wt% of aluminum as hydrocarbylaluminum dissolved in organic solvent, and a second portion consisting essentially of 3 to 20 wt% of total aluminum as hydrocarbylaluminum and hydrocarbylaluminoxane, and wherein for each mole part of aluminum in solution in said second portion, there is in the range of only 0.03 to 0.3 mole part of hydrocarbylaluminum, and wherein (a) and (b) are conducted on a continuous basis. Substantially the entire balance of dissolved aluminum in the second portion is composed of hydrocarbylaluminoxane. In preferred embodiments, the first portion is recycled to the reactor.

In particularly preferred embodiments, the process is conducted on a continuous basis, particularly in operations wherein the first portion is continuously recycled to the reactor. In conducting the process on a continuous basis it is highly desirable, though not essential, to perform the reaction in a continuous loop reactor or pump-around system such as described in USP 5,599,964. It is also advantageous, though not essential, to utilize the modes of water feed or injection described therein.

It is advantageous, though not essential, to make aluminoxane compositions by the addition of water to a solvent solution of a hydrocarbylaluminum and/or an aluminoxane, by feeding the water through an orifice which is surrounded by a flow of solvent which carries the water into the solvent solution. Thus this invention also provides an improved process for making aluminoxane compositions by the addition of water to a solvent solution comprising a hydrocarbylaluminum compound and/or an aluminoxane in an organic solvent, wherein the improvement comprises feeding said waterthrough an orifice which Is surrounded by a flow of solvent which carries said water into said solvent solution of hydrocarbylaluminum and/or aluminoxane.

These and other embodiments of the invention will be still further apparent from the ensuing description and appended claims.

### BRIEF DESCRIPTION OF THE DRAWINGS

Figs. 1 through 5 are various schematic process flow diagrams of plant facilities that can be used in the practice of this invention.

Fig. 6 is a schematic diagram showing a pumparound reactor system used in the embodiment of the process of the invention described in Example 7.

Fig. 7 is a schematic diagram showing a water injection system used in carrying out the embodiment of the process of the invention described in Example 7.

Fig. 8 is a schematic diagram showing a pumparound reactor system used in the embodiment of the process of the invention described in Examples 8 and 9.

Fig. 9 is a schematic cross-sectional view of a water and solvent injector and in-line mixing system used in the embodiment of the process of the invention described in Examples 8 and 9.

Fig. 10 is a schematic diagram showing a pumparound reactor system used in the embodiment of the process of the invention described in Example 10.

Fig. 11 is a schematic diagram showing a water injection system used in carrying out the embodiment of the process of the invention described in Examples 10 and 11.

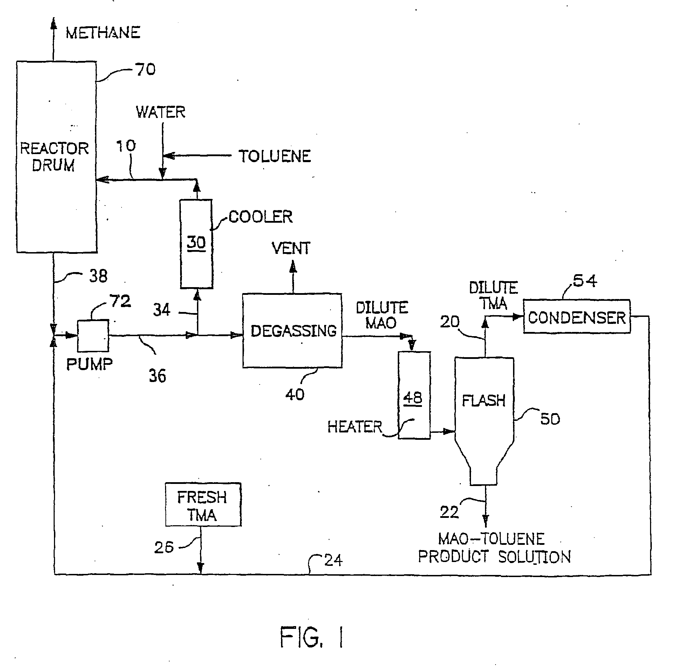

In Figs. 1 through 5 like numerals represent like components among the several views, and the drawings thereof are presented for purposes of illustration, and thus are simplified in the sense that valves, motors, holdup tanks, filters, additional pumps, etc., are not depicted therein. Such details are unnecessary for an understanding of this invention and can be provided as desired in accordance with well-established chemical engineering principles.

### FURTHER DESCRIPTION OF THE INVENTION

Hydrocarbylaluminoxanes may exist in the form of linear, cyclic, caged or polymeric structures with the simplest compounds being a tetraalkylaluminoxane such as tetramethylaluminoxane, (CH₃)₂AlOAl(CH₃)₂, or tetraethylaluminoxane, (C₂H₅)₂AlOAl-(C₂H₅)₂. The compounds preferred for use in olefin polymerization catalysts are oligomers, and these usually contain 4 to 20 of the repeating units: 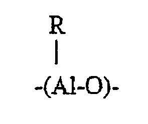 where R is C₁-C₈ alkyl and is preferably methyl. The exact structure of aluminoxanes has not been defined and they may contain linear, cyclic, caged and/or cross-linked species. Methylaluminoxanes (MAOs) normally have lower solubility in organic solvents than higher alkylaluminoxanes and the methylaluminoxane solutions tend to be cloudy or gelatinous due to the separation of particles and agglomerates. In order to improve the solubility of the methylaluminoxane, higher alkyl groups, e.g. C₂ to C₂₀ can be included such as by hydrolyzing a mixture of trimethylaluminum with up to 50 mole percent of a C₂ to C₂₀ alkylaluminum compound such as, for example, triethylaluminum, tri-n-propylaluminum, triisobutylaluminum, tri-n-hexylaluminum, tri-n-octylaluminum or a triarylaluminum. The MAO's can also contain up to 20 mole percent, based on aluminum, of moieties derived from amines, alcohols, ethers, esters, phosphoric and carboxylic acids, thiols, alkyl and aryl disiloxanes and the like to further improve activity, solubility and/or stability. Except as the context otherwise indicates by virtue of the specific materials specified for use (e.g., in the Examples hereinafter), such modified and mixed methyl-higher alkyl or aryl aluminoxanes are included in the term "methylaluminoxane" as used herein.

Any hydrocarbylaluminum compound or mixture of compounds capable of reacting with water to form an aluminoxane can be used. This includes, for example, trialkylaluminum, trialkenylaluminum, triarylaluminum, tricycloalkylaluminum, triaralkylaluminum, mixed alkyl arylaluminum, or dialkylaluminum hydride.

Preferred hydrocarbylaluminum compounds are the alkylaluminum compounds, especially trialkylaluminum compounds such as trimethylaluminum, triethylaluminum, triisobutylaluminum, tri-n-hexylaluminum, trioctylaluminum, and the like. Of these, the more preferred are the tri-C₁₋₄-alkylalumlnum compounds.

It will be appreciated that when the separated solution consisting essentially of hydrocarbylaluminum compound(s) and solvent is recycled, small amounts of aluminoxane may also be recycled therewith, although the less, the better. The process of the invention thus includes not only the addition of water to hydrocarbylaluminum compounds, but to mixtures of aluminoxanes and hydrocarbylaluminum compounds as well.

The reaction is carried out in an inert solvent. Any inert solvent can be used. The preferred solvents are aliphatic and aromatic hydrocarbons. Aromatic hydrocarbons are more preferred. Examples include toluene, Xylene, ethylbenzene, cumene, mesitylene and the like. The most preferred solvent is toluene.

The water can be added to the reaction either neat and/or dissolved or dispersed in the solvent. The reactants are combined in proportions to provide from 0.5 to 8.0 moles of hydrocarbylaluminum compound per mole of water. When making methylaluminoxanes, the proportions are preferably from 1.3 to 6.0 moles of trimethylaluminum and more preferably from 2.0 to 4.0 or 5.0 moles per mole of water.

Suitable reaction temperatures fall in the range of from -70 to 100°C, with a preferred range being -50 to 50°C. A more preferred range is from -20 to 20°C.

The following examples illustrate preferred procedures for conducting the process of this invention. All percentages given in these examples are by weight, and are approximate as they are largely based on computer simulations from bench scale studies. It is to be clearly understood that these examples are for the purposes of illustrating current best modes contemplated for carrying out the operations. They are not intended to limit, and should not be construed as limiting, the invention to the specific details set forth therein.

### EXAMPLE 1

To a continuous loop reactor system such as depicted in Fig. 1 hereof composed in essence of reactor **70,** pump **72,** cooler **30,** and lines **10, 34, 36** and **38** (see also commonly-owned USP 5,599,964), are continuously charged via line **10,** 71 8 kg/hr of 3.8 wt% of trimethylaluminum (TMA) in toluene, 13 kg/hr of toluene and 1.36 kg/hr of water. This provides a ratio of waterto aluminum of 0.2. The reaction mixture is maintained at a temperature of about 2°C by circulation through cooler **30.** The reaction product after degassing in degasser **40** is approximately 730 kg/hr of 96.3 wt% toluene, 3.0 wt% TMA, 0.7 wt% methylaluminoxane (MAO). With a 10 micron filter in the system (not shown), virtually no solids are detected, and thus under these reaction conditions, no aluminum is lost as solids. Continuous flash in still unit **50** operated at 105 mmHg and 55°C gives a separation into (a) an overhead or take-off in line **20** at the rate of about 712 kg/hr of a solution of approximately 3.0 wt% TMA and 97 wt% toluene, and (b) bottoms in line **22** at the rate of approximately 18 kg/hr of a product solution composed of about 27% MAO, 3% TMA, and 70% toluene. Heater **48** raises the temperature of the feed to unit **50** and thus supplies the heat used in the operation of unit **50.** Addition via line **26** of 6 kg/hr of 100% TMA to the condensed overhead in line **24** regenerates the TMA feed rate, which is recycled to the loop reactor system.

### EXAMPLE 2

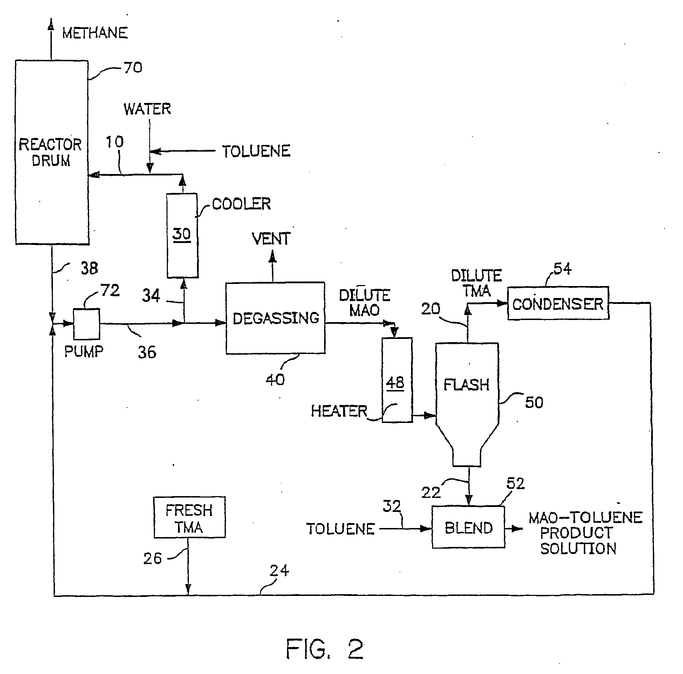

In this case the flow scheme as depicted in Fig. 2 is used. This is essentially the same arrangement as in Fig. 1 except that the bottoms in line **22** are directed to blending tank **52** to enable adjustment of concentration through dilution with additional solvent. Thus in this case there are continuously charged to the reactor **70,** 454.5 kg/hr of 6.0 wt% TMA in toluene, 8.4 kg/hr of toluene and 1.36 kg/hr of water. This provides a ratio of water to aluminum of 0.2. The reaction mixture in the continuous loop reactor system is maintained at a temperature of about 2°C. The reaction product after degassing in degasser **40** is approximately 462 kg/hr of 94% toluene, 5% TMA, and 1 % MAO. With a 10 micron filter in the system (not shown), virtually no solids are detected. Thus under these reaction conditions, no aluminum is lost as solids. Continuous flash in unit **50** operated at 105 mmHg and 55°C gives a separation into (a) an overhead or take-off in line **20** at the rate of approximately 448.5 kg/hr of a mixture of about 4.7% TMA and 95.3% toluene, and (b) bottoms in line **22** at the rate of approximately 13.5 kg/hr of a solution of about 35.8% MAO, 4.5% TMA, and 59.7% toluene, The overhead is liquefied in condenser **54** and recycled to the loop reactor system or section composed of reactor **70,** pump **72,** cooler **30,** and lines **10, 34, 36** and **38,** all as in Example 1, Addition via line **32** of approximately 4.3 kg/hr of toluene to the bottoms in tank **52** gives approximately 18 kg/hr of a desired product concentrate composed of about 27% MAO, 3% TMA, and 70% toluene. Addition via line **26** of 6 kg/hr of 100% TMAto the condensed overhead in line **24** regenerates the TMA feed rate, which is recycled to the loop reactor system.

### EXAMPLE 3

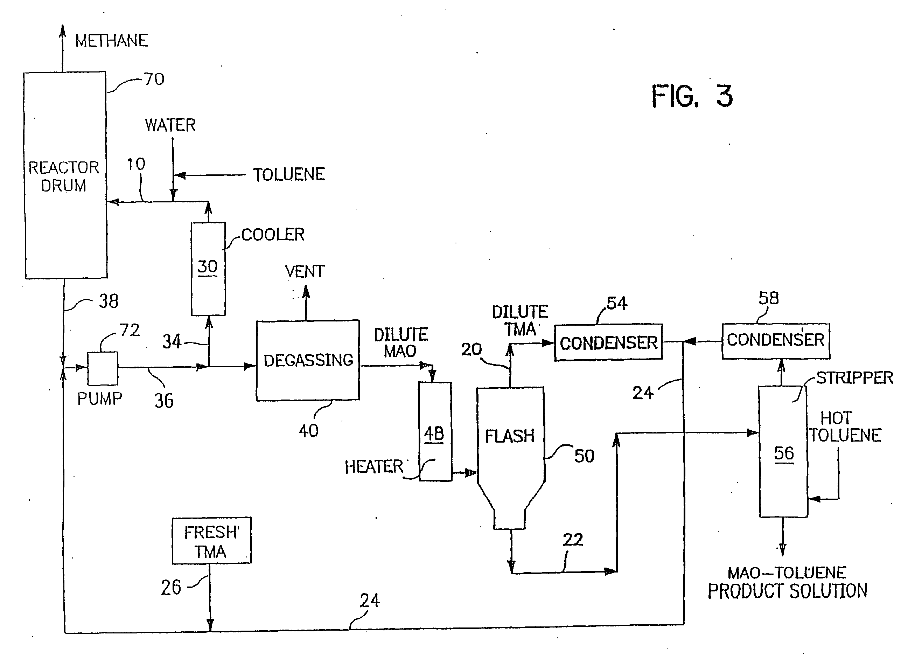

The system depicted in Fig. 3 is used in this example. The only difference between the systems of Figs. 1 and 3 resides in the product workup portion of the operation. Thus to the continuous loop reactor are continuously charged 419.5 kg/hr of 6.5 wt% TMA in toluene, 4.5 kg/hr of toluene and 1.36 kg/hr of water. This provides a ratio of water to aluminum of 0.2. The reaction mixture is maintained at a temperature of about 2°C. The reaction product after degassing is approximately 423.5 kg/hr of a mixture composed of about 94% toluene, 5% TMA, and 1 % MAO. With a 10 micron filter (not shown) in the system, virtually no solids are detected. Thus under these reaction conditions, no aluminum is lost as solids. Continuous flash at 105 mmHg and 55°C gives a separation into (a) an overhead or take-off in line **20** at the rate of approximately 404 kg/hr of a solution composed of about 5.1 % TMA and 94.9% toluene, and (b) bottoms in line **22** at the rate of about 19.3 kg/hr of a mixture containing about 69.3% toluene, 5.7% TMA and 25% MAO. The bottoms stream is transferred to a 10-stage stripper column **56,** where it is introduced at the top, and 8.2 kg/hr of toluene vapor at 110°C is introduced at the bottom. The resulting overhead is approximately 9.6 kg/hr of a solution of approximately 5.1% TMA and 94.9% toluene. The two overhead streams after liquefaction in respective condensers **54** and **58** are merged into line **24** and combined with 6 kg/hr of 100% TMA from line **26** to regenerate the TMA feed rate, which is recycled to the loop reactor section. The stripper bottoms product is a concentrate of approximately 27% MAO, 3% TMA and 70% toluene obtained at the rate of about 18 kg/hr.

### EXAMPLE 4

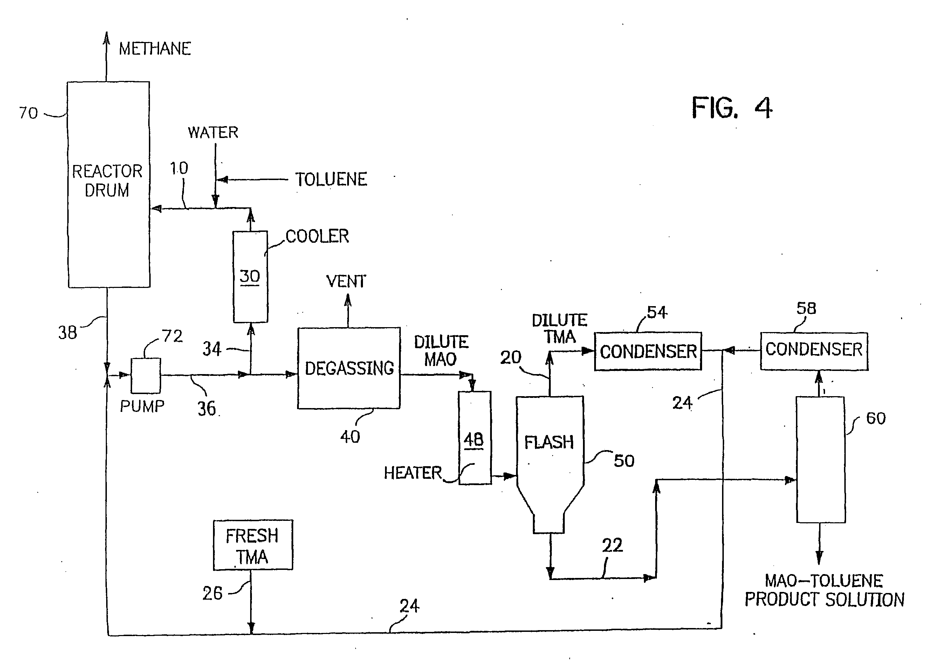

Used is the system of Fig. 4 which includes a loop reactor arrangement as in Examples 1-3 above and a wiped film evaporator **60.** Except for use of wiped film evaporator **60** instead of stripper column **56**, the systems of Figs. 3 and 4 are essentially the same. The continuous feeds to the reactor **70** are 718 kg/hr of 3.8 wt% TMA solution, 135 kg/hr of toluene and 1.36 kg/hr of water, which equates to a ratio of water to aluminum of 0.2. The reaction mixture is maintained at a temperature of about 2°C. The reaction product after degassing in unit 40 is approximately 730 kg/hr of a mixture composed of about 96.3 wt% toluene, 3.0 wt% TMA and 0.7 wt% MAO. With a 10 micron filter in the system, virtually no solids are detected. Thus under these reaction conditions, no aluminum is lost as solids. Continuous flash in unit **50** operated at 210 mmHg and 72°C gives a separation into (a) an overhead or take-off in line **20** at the rate of about 690 kg/hr of a solution composed of approximately 2.95 wt% TMA and 97.05 wt% toluene, and (b) bottoms in line **22** at the rate of about 40 kg/hr of approximate composition 12.2% MAO, 3.8% TMA and 84% toluene. The bottoms are continuously fed to the wiped film evaporator **60** operated at 105 mmHg and 55°C which gives as overhead, about 22 kg/hr of a solution composed of approximately 3.7 wt% TMA and 96.3 wt% toluene, and as bottoms at the rate of about 18 kg/hr, a solution composed of about of 27% MAO, 4% TMA and 69% toluene. The two overhead streams after liquefaction in respective condensers **54** and **58** are merged and combined with 6 kg/hr of 100% TMA from line **26** to regenerate the proper TMA feed composition and rate, which composition is recycled to the loop reactor section.

### EXAMPLE 5

To the continuous loop reactor section of a system such as depicted in Fig. 1 hereof are continuously charged via line **10,** 614 kg/hr of 4.3 wt% of trimethylaluminum (TMA) in toluene, 10 kg/hr of toluene and 1.36 kg/hr of water. This provides a ratio of water to aluminum of 0.2. The reaction mixture in the loop reactor section is maintained at a temperature of about 2°C by circulation through cooler **30.** The reaction product after degassing in degasser **40** is approximately 624 kg/hr of a mixture of approximate composition 95.7 wt% toluene, 3.4 wt% TMA, 0.8 wt% methylaluminoxane (MAO). With a 10 micron filter in the system (not shown), very little solids are detected, and thus under these reaction conditions, essentially no aluminum is lost as solids. Continuous flash in still unit 50 operated at 105 mmHg and 55°C gives a separation into (a) an overhead ortake-off in line **20** at the rate of about 606 kg/hr of a solution of approximately 3.3 wt% TMA in toluene, and (b) bottoms in line **22** at the rate of approximately 18 kg/hr of a product solution composed of about 27% MAO, 3% TMA, and 70% toluene. Addition via line **26** of 8 kg/hr of 80% TMA in toluene to the condensed overhead in line **24** regenerates the TMA feed, which is recycled to the loop reactor system.

Example 6 illustrates a modification wherein less stringent process control is used in order to achieve process economies. In this embodiment, small losses in yield based on aluminum used are accepted and effectively dealt with, all in return for improved overall economies of plant operation.

### EXAMPLE 6

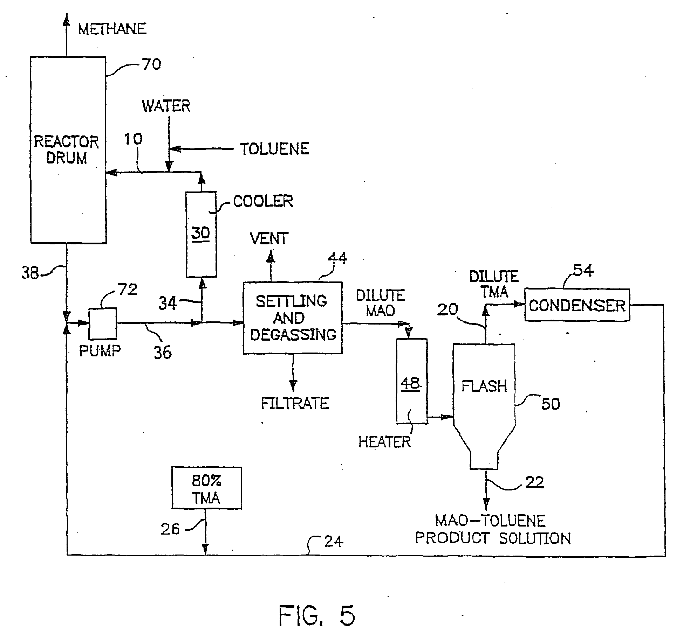

The overall system used is as schematically depicted in Fig. 5. It will be seen that this system is basically the same as that of Fig. 1 except that degasser unit **40** of Fig. 1 is replaced by settling and degasser unit **44.** Unit **44** is designed to both de-gas the reaction product from the continuous loop reactor section and to cause solids in the reaction product to settle and be filtered from the liquid phase before the liquid reaction product is partitioned in unit **50.** Thus, to the continuous loop reactor section comprising reactor **70,** pump **72,** cooler **30** and lines **10, 34, 36** and **38** are continuously charged via line **10**, 364 kg/hr of 5.0 wt% of trimethylaluminum (TMA) in toluene, 22 kg/hr of toluene and 1.36 kg/hr of water, which corresponds to a ratio of water to aluminum of 0.3. The reaction mixture in the loop reactor section is maintained at a temperature of about 2°C by circulation through cooler **30.** The reaction product after degassing and solids removal in unit **44** is approximately 374 kg/hr of a mixture of approximate composition 95.3 wt% toluene, 3.3 wt% TMA, 1.3 wt% methylaluminoxane (MAO). With a 10 micron filter in unit **44,** a loss of about 3 mole % of total aluminum is incurred. Continuous flash in still unit **50** operated at 105 mmHg and 55°C gives a separation into (a) an overhead or take-off in line **20** at the rate of about 356 kg/hr of a solution of approximately 3.3 wt% TMA in toluene, and (b) bottoms in line **22** at the rate of approximately 18 kg/hr of a product solution composed of about 27% MAO, 3%TMA, and 70% toluene. Addition via line **26** of 8 kg/hr of a solution of 80 wt% TMA in toluene to the condensed overhead in line **24** regenerates the TMA feed, which is recycled to the loop reactor section.

When operating with solids formation as in Example 6, the solution from the reactor section should contain a limited amount of finely-divided aluminum-containing solids. In general, the total amount of aluminum in the solids should be not more than 10% of the total weight of all aluminum species present (i.e., in solution and in the solids). These finely divided solids, will typically have particle sizes in a range that will pass through a 50 micron filter but will be retained by a 10 micron filter.

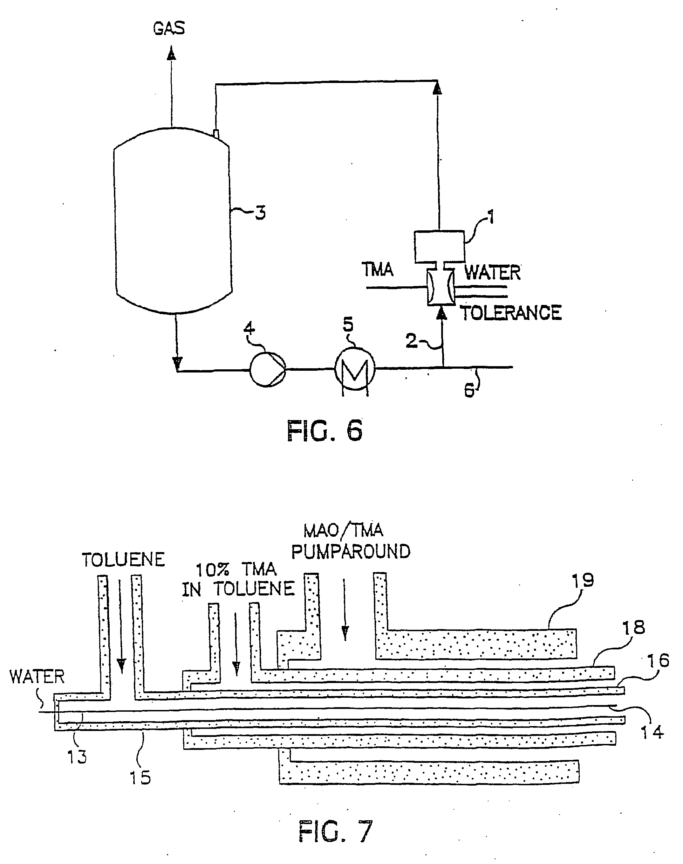

In preferred embodiments, this invention thus provides a continuous process of forming methylaluminoxane. The process involves in stage (a), continuously feeding trimethylaluminum, water, and organic solvent to a reactor under temperature conditions and in proportions that form a solution containing a total in the range of 0.5 to 8 wt% of aluminum as trimethylaluminum and methylaluminoxane, and wherein for each mole part aluminum in the solution, the solution contains in the range of 0.10 to 0.63 (most preferably in the range of 0.16 to 0.63) mole parts of trimethylaluminum. In stage (b) the reaction solution formed in (a) is continuously degassed. Then in stage (c), the degassed solution is continuously flashed to form an overhead which is essentially 0.5 to 8 wt% of aluminum as trimethylaluminum dissolved in organic.solvent, and bottoms composed essentially of 4 to 20 wt% of aluminum as methylaluminoxane and trimethylaluminum. For each mole part of aluminum in solution in these bottoms, there is in the range of no more than 0.03 to 0.3 (most preferably in the range of 0.05 to 0.20) mole part of trimethylaluminum. Stage (d) involves recycling as a portion of the feed in stage (a), at least a portion of the overhead of stage (c). For such continuous operation, makeup trimethylaluminum and makeup inert solvent are included in the feed in stage (a), and most preferably trimethylaluminum and inert solvent of the feed of stage (a) are composed or made up of (i) the recycle from stage (d), (ii) the makeup trimethylaluminum, and (iii) the makeup inert solvent. In this way, the proportions of (a) are maintained by this feed. As indicated in the Drawings, It is desirable to combine the makeup trimethylaluminum (and more preferably also a portion of the makeup inert solvent) with the recycle from stage (d) before the feed in stage (a). Likewise, it is most preferred to mix together the water and a portion of the inert solvent of the feed of stage (a) before these are fed in stage (a). For this purpose the use of the modes of water feed or injection described in commonly-owned USP 5,599,964 or as described hereinafter in connection with Figs. 6 through 11 and Examples 7 through 11, are particularly advantageous. A particularly preferred way of effecting the feeds in stage (a) comprises combining the makeup trimethylaluminum and a portion of the makeup inert solvent with the recycle from stage (d) and feeding this combined mixture in stage (a), and in addition, combining the water and another makeup portion of inert solvent and feeding this combined mixture in stage (a).

We turn now to the improved process of the invention for feeding water to a solvent solution of a hydrocarbylaluminum compound and/or an aluminoxane.

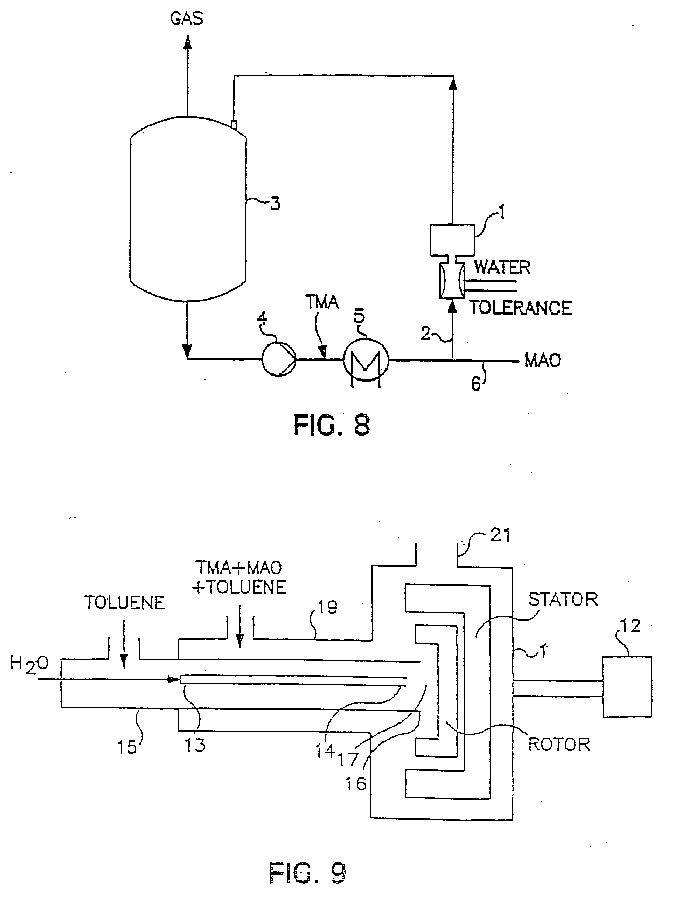

In the embodiment of the process of the invention which is Illustrated in Fig. 6, water, trimethylaluminum (TMA) and toluene are continuously injected into the inlet of an in-line mixer **1** which is located in a reactor loop **2.** Alternatively TMA can be fed to the reactor at a different point, for example, between pump **4** and cooler **5** as Illustrated in Fig. 8. The water and TMA react and the reaction mixture, which includes product methylaluminum (MAO) and unreacted TMA, are circulated through loop **2** to degassing tank **3** where methane gas is vented. The reaction mixture is then pumped back to the inlet of in-line mixer **1** such as an IKA Works in-line disperser, whose rotor operates at speeds of from about 7,000 to 13,000 rpm, by pump **4.** The heat of reaction is maintained within a selected temperature range by use of cooler **5.** MAO product in solvent, which contains unreacted TMA, is continuously drawn off through line **6.** TMA and solvent can be flashed from the crude MAO product and returned, for example, to degasser **3** or to line **2** ahead of the in-line mixer. The in-line mixer produces a homogeneous reaction zone and the large volume recycle of product stream provides both heat absorption and dilution of the reactants, especially the water, such that localized overheating and/or any significant temperature rise is avoided. The continuous introduction of reactant and withdrawal of product permits a constant concentration of reactants to be maintained in a steady state reaction which helps to achieve a more uniform and reproducible product in improved yields. It also permits the sequential production of a variety of products simply by adjustment of the reactant feed rates and ratios.

Fig. 7 illustrates a device which is suitable for introducing water to a solvent solution of aluminum alkyl in accordance with the process of the invention Illustrated in Fig. 6. Water passes through a capillary tube **13** which is coaxially arranged within tube **15.** The tip **14** of tube **13** is recessed about 1 to 2 mm from the end **16** of tube **15.** Solvent passing through tube **15** sweeps water from tip **14** of tube **13** and carries the water into the TMA in solvent and pump-around mixture of TMA and MAO in solvent which enters through tubes **18** and **19** respectively and then into the mixing device (not shown). By using a flow of solvent to surround and sweep the waterto the TMA containing mixture, plugging of the end of the water delivery tube due to aluminum oxide formation can be avoided.

Fig. 9 illustrates another device which is suitable for introducing water to a reaction zone in accordance with the process of the invention as illustrated in Fig. 8. The device is associated with reactor/stator in-line mixer **1** which is driven by motor **12.** Water passes through a capillary tube **13** which is coaxially arranged within tube **15** which has a diameter of, for example, 3.0 mm. The tip **14** of capillary tube **13** is recessed about 1 to 2 mm from the end **16** of tube **15.** Solvent passing through tube **15** sweeps water from tip 14 into the reaction zone **17** where the water reacts with a TMA-MAO-solvent mixture which enters reaction zone **17** through tube **19.** The reaction mixture exits from rotor/stator in-line mixer **1** through outlet **21.** The inner diameter of capillary tube **13** can be selectedto deliver either a stream or individual droplets of water. For example, inner diameters of from 0.001 to 0.1 mm. The end of the water injection tube or nozzle should be positioned so that the water sprays out without contacting the walls of the solvent conduit. Otherwise, the water may collect on the walls because of the two immiscible liquid phases. In general, the ratio of the weight of the flow of solvent used to carry the water to the reaction zone to the weight of water ranges from 10 to 1 to 1000 to 1 and preferably from 25 to 1 to 150 to 1. Other suitable devices in which the end of a nozzle or tube carrying the water is positioned within a flow of solvent can be used to introduce water to the reaction. The water can be predispersed in a portion of the solvent. The shape of the tubes or conduits is not critical and they can have other than a circular cross-section. Also, other mixing devices can be used which provide high shear in the reaction zone including, but not limited to, ultrasonic, propeller and static mixers. In fact, it was found that a good product in high yield could be obtained even when the rotor/stator mixer was turned off. The hydrocarbylaluminum compounds and aluminoxane products are protected from oxygen and moisture by means of an inert gas atmosphere, such as dry nitrogen.

The volumes and flow rates of the water, solvent and recycle stream provide a very dilute concentration of water to give a more uniform hydrolysis reaction. For example, the total stream is at least 200 times the volume of water feed, preferably 5,000 times greater, and more preferably at least 8,000 times greater. The water is entirely soluble in the higher flow of solvent and plugging of the reactor, which can occur when using a continuous T-type reactor due to localized over reaction, is avoided. The result is a stable reaction without need of interruption to clear blockages.The high pump-around flow minimizes any temperature rise due to the highly exothermic hydrolysis reaction. Relative concentrations of water and hydrocarbylaluminum compound in the reaction zone can be maintained substantially constant by continually adding makeup hydrocarbylaluminum and water in the proportions that they are reacted and removed from the pumparound flow.

The reaction feed and product removal rates are adjusted to give a concentration of crude aluminoxane product in solvent of from 1 to 5 weight percent. The concentration of unreacted hydrocarbylaluminum can range from 0 to 10 weight percent. When making MAO, the MAO product concentration generally ranges from 20 to 30 weight percent and unreacted TMA from 2 to 10 weight percent based on the total weight of MAO, TMA and solvent. Feed rates depend upon the size of the reactor used. The crude aluminoxane product can be concentrated by the removal of solvent and unreacted alkylaluminum compound.

The invention is further illustrated by, but is not intended to be limited to, the following examples.

### EXAMPLE 7

Example 7 was run using a reactor and water injection system similar to that illustrated in Figs. 6 and 7 to produce MAO. The flow rates were 2.80 kg/hourtoluene, 0.04 kg/hour water, 2.26 kg/hour of 10 weight percent TMA in toluene and 13.18 kg/hour of the pumparound mixture of 96.1 weight percent toluene 1.6 weight percent TMA and 2.3 weight percent MAO. The reaction temperature was about 6°C. The tube and channel dimensions are given in Table 1. The tip **14** of water tube **13** was recessed about 1 mm from the end **16** of solvent tube **15,** whose end **16** in turn extended abut 3 mm beyond the outlet of MAO tube **18.** The in-line mixer **1** was a IKA Works UTL 25 with a dispersion chamber and "fine dispersing elements" operating at about 11,700 rpm. No pluggage of capillary tube **13** was observed during 100 minutes of run time.

### EXAMPLE 8

Example 8 was run using a reactor and water injection system similar to that Illustrated in Figs. 8 and 9 to produce MAO. The TMA in toluene was injected into the pumparound flow between the cooler and the pump. The flow rates were 2.55 kg/hour toluene, 0.02 kg/hour water, 3.03 kg/hour 10 weight percent TMA in toluene, and 682 kg/hour of the pumparound mixture of 1.9 weight percent TMA, 1.9 weight percent MAO and 96.2 weight percent toluene. The reaction temperature was about 6°C. The tube and channel dimensions are given in Table 1. Thetip **14** of water capillary tube **13** was recessed about 1 mm from the end **16** of solvent tube **15.** The in-line mixer **1** was the same as used in Example 7 but the rotor was not turned on (0 rpm). No pluggage of capillary tube **13** was observed during 2 hours of run time.

### EXAMPLE 9

Example 9 was run using an apparatus and mixer similar to that used for Example 8 to produce MAO. The flow rates were 2.0 kg/hour toluene, 0.05 kg/hour water, 5.4-5.7 kg/hour 10 weight percent TMA in toluene, and 682 kg/hour of pumparound mixture of 5.6 weight percent TMA, 3.4 weight percent MAO and 91 weight percent toluene. The reaction temperature was about 11 °C. The tube and channel dimensions are given in Table 1. The in-line mixer was operated at 7,000 rpm. No pluggage of capillary tube **13** was observed during 6 hours of operation.

However, when the injection system was changed such that tip **14** of water capillary tube **13** extended slightly past end **16** of solvent tube **15,** tip **14** plugged with white aluminum oxide in less than 1 minute after starting the water injection.

**Table 1**

| Tube Dimensions | | | | |
|---|---|---|---|---|
| Example | 7 | 8 | 9 | 10 |
| Water Capillary 13 ID¹ | 0.05 | 0.05 | 0.05 | 0.05 |
| Water Capillary 13 OD² | 0.35 | 0.35 | 0.35 | 0.35 |
| Solvent Tube 15 ID | 1.4 | 1.4 | 1.4 | 1.4 |
| Solvent Tube 15 OD | 3.2 | 3.2 | 3.2 | 3.2 |
| TMA Tube 18 ID | 4.6 | 4.6 | N/A³ | N/A |
| TMA Tube 18 OD | 6.4 | 6.4 | N/A | N/A |
| Pumparound Tube 19 ID | 9.4 | 9.4 | 9.4 | 9.4 |
| Pumparound Tube 19 OD | 12.7 | 12.7 | 12.7 | 12.7 |

| | | | | |
|---|---|---|---|---|
| ¹ID=inner diameter in mm for each tube in list ²OD = outer diameter in mm for each tube in list ³N/A = not applicable (tube 18 does not exist) | | | | |

### EXAMPLE 10

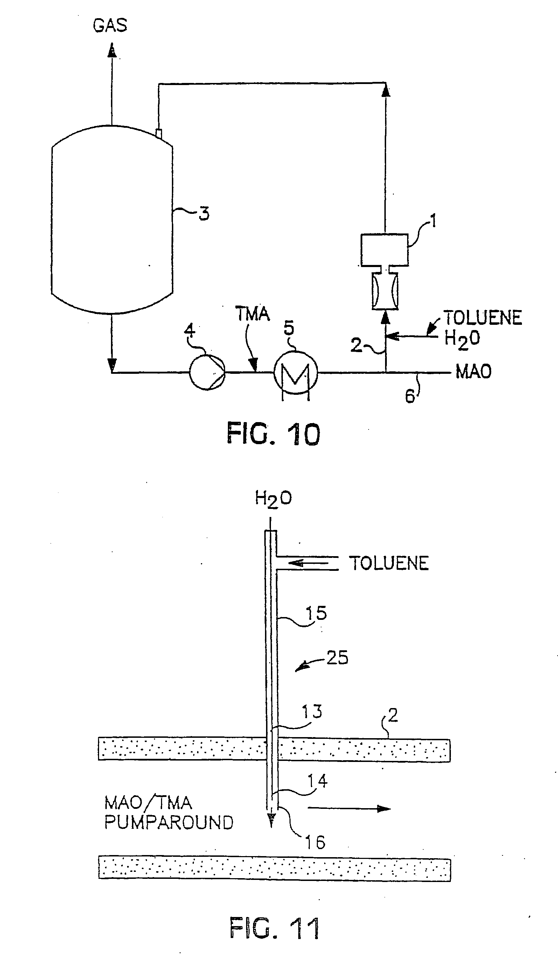

The apparatus used is shown In Figs. **10** and **11.** The water was injected into the pumparound loop **2** ahead of mixer **1** rather than at the inlet. Injector system **25** as illustrated in Fig. **10** has the solvent tube **15** and water capillary tube **13** arranged about perpendicular to the flow of solvent, product MAO and unreacted TMA in pumparound loop **2.** Tip **14** of tube **13** is recessed about 1 mm from the end **16** of tube **15.** The inner diameter of water capillary tube **13** is 0.55 mm and its outer diameter is 0.65 mm. The inner diameter of solvent tube **15** is 1.4 mm and its outer diameter is 3.2 mm. The inner diameter of loop 2 is 9.4 mm and its outer diameter is 12.7 mm. The remainder of the system shown in Fig. 10 is the same as the system used in Example 8 (Fig. 8). The feeds were 12.3 weight percent TMA in toluene under nitrogen pressure, toluene (10 ppm water) under nitrogen pressure and deuterated water (purged with helium). The TMA solution and water were fed by metering pumps and the nitrogen was fed under nitrogen pressure. The degasser was charged with 3.65 kg (4.09 L) of TMA solution and the bulk temperature was brought down to 2-3°C. The flow through the mixer was 522 kg/hr and the mixer was started and set to run at 7500 rpm (t = 0). The toluene feed was started at t = 40 minutes (average: 1.5 kg/hr, 16.3 gmol/hr); the TMA feed at t = 48 minutes (average: 6.0 kg/hr: 0.7 kg/hr TMA + 5.26 kg/hr toluene, 10.2 gmol/hr TMA, 57.2 gmol/hr toluene); and the water feed at t = 140 min (0.4 g min, 1.33 gmol/hr H₂O). The reaction zone temperature was 2-3°C, the H₂O/TMA mole feed ratio was 0.13, the bulk/H₂O flow volume ratio was about 24,000 and the bulk/H₂O mass flow ratio was about 22,000. The expected Al weight percent was 3.7 weight percent and the residence time constantwas 29 minutes. Crude MAO was continuously withdrawn to maintain a constant level in the system and collected at t = 323 minutes, 6.3 time constants. After t = 248 minutes, the mixer was turned off and two samples were analyzed to look at steady state. The results are shown in Table 2.

**Table 2**

| Sample | Time (+) Min | Time Constant | % Al | TMA % Vol | Wt. % Solids | Al as TMA |
|---|---|---|---|---|---|---|
| 1^{(a)} | 248 | 3.7 | 3.53 | 7.95 | 0 | 84% |
| 2^{(b)} | 423 | 9.8 | 3.68 | 8.28 | 0 | 84% |

| | | | | | | |
|---|---|---|---|---|---|---|
| (a) sampled just after the mixer was turned off (b) mixer off | | | | | | |

### EXAMPLE 11

The apparatus used is shown in Figs. 10 and 11 except that part of the pump-around flow was sent through a second cooler arranged in parallel with cooler 5 and reentered loop **2** after the crude MAO product removal point. This run was made without cleaning the water injection apparatus from Example 10. Total run time = 11 hours. The rotor of mixer **1** was not turned on (rpm = 0). The feed materials, were the same as for Example 10 except that deionized water was used. The degasser was charged with 6.4 kg, 7.2 L of TMA solution (12.3%) and the bulk temperature was brought down to 1-3°C. The flow through mixer 1 was 545 kg/hr. The TMA feed was started (t= 0) (average: 8.2 kg/hr, i.e., 1.0 kg/hr TMA + 7.2 kg/hr toluene; 14.0 gmol/hr TMA + 78 gmol/hr toluene) and then at t= 6 minutes the toluene feed was started (average: 1.2 kg/hr, 12.8 gmol/hr. Thewaterfeed was started att= 21 minutes (0.89 g/min, 3.0 gmol/hr H₂O). The reaction zone temperature was 1-3°C, the H₂O TMA molar feed ratio was 0.21, the bulk/H₂O flow volume ratio was about 11,000 and the bulk/hr mass flow ratio was about 10,000. The expected Al weight percent was 3.99 weight percent and the residence time constant was 41 minutes. The crude MAO was continuously withdrawn to maintain a constant level and at t = 213 minutes, 4.7 time constants collection was begun and ended at 273 minutes, 6.1 time constant with 10.9 kg collected. Analysis of a sample taken att = 270 minutes gave 3.73 wt percent Al, 7.5 weight percent TMA, 72% Al as TMA. No visible solids were immediately observed in the crude MAO samples. After about one week of storage at -15°C a very faint film of solids appeared at the bottom of the sample bottles. Aluminum yield was estimated to be greater than 99%.

This feeding process of this invention is extraordinarily useful for adding water to aluminum alkyls without pluggage, so as to lower production costs through less downtime, less solvent recycle and better aluminum utilization. It provides a way to continuously add waterto an aluminum alkyl and/or aluminoxane stream without process pluggage in immediate process piping. As long as the solvent is warm, it is also be possible to use this invention to inject water at subfreezing temperatures. The lower temperatures is expected to yield improvements in the reactor, particularly for the MAO pumparound production modes.

Unless otherwise expressly stated, all boiling temperatures set forth in this disclosure and in the claims hereof are specified at atmospheric pressure.

## Claims

1. A process wherein trimethylaluminum, water and organic solvent are fed to a reactor to form methylaluminoxane, said process comprising (a) feeding such materials to the reactor under temperature conditions and in proportions that form a solution containing in the range of 0.5 to 15 wt.% of aluminum as trimethylaluminum and methylaluminoxane, and wherein for each mole part of aluminum in the solution, there is in the solution in the range of 0.1 to 0.9 mole part of trimethylaluminum, said trimethylaluminum and said water are combined in proportions to provide 2.0 to 5.0 moles of trimethylaluminum per mole of water; and (b) separating the solution into a first portion consisting essentially of 0.5 to 15 wt.% of aluminum as trimethylaluminum dissolved in organic solvent, and a second portion consisting essentially of 3 to 20 wt % of total aluminum as methylaluminoxane and trimethylaluminum, and wherein for each mole part of aluminum in solution in said second portion, there is in the range of no more than 0.03 to 0.3 mole part of trimethylaluminum.

2. A process according to Claim 1 which further comprises recycling at least part of said first portion to the reactor.

3. A process wherein hydrocarbylaluminum, water and organic solvent are fed to a reactor to form hydrocarbylaluminoxane, said process comprising (a) feeding such materials to the reactor under temperature conditions and in proportions that form a solution containing in the range of 0.5 to 15 wt.% of aluminum as hydrocarbylaluminum and hydrocarbylaluminoxane, and wherein for each mole part of aluminum in the solution, there is in the solution in the range of 0.1 to 0.9 mole part of hydrocarbylaluminum; and (b) separating the solution into a first portion consisting essentially of 0.5 to 15 wt.% of aluminum as hydrocarbylaluminum dissolved in organic solvent, and a second portion consisting essentially of 3 to 20 wt.% of total aluminum as hydrocarbylaluminoxane and hydrocarbylaluminum, and wherein for each mole part of aluminum in solution in said second portion, there is in the range of no more than 0.03 to 0.3 mole part of hydrocarbylaluminum, and wherein (a) and (b) are conducted on a continuous basis.

4. A process according to Claim 3 which further comprises continuously recycling at least part of said first portion to the reactor.

5. A process according to Claim 3 wherein the separation of (b) is effected by continuous flashing or distillation.

6. A process according to Claim 3 wherein the hydrocarbylaluminum is trimethylaluminum and the aluminoxane is methylaluminoxane.

7. A process according to Claim 6 wherein:
(a) the trimethylaluminum, water, and organic, solvent are continuously fed to a reactor under temperature conditions and in proportions that form a solution containing a total in the range of 0.5 to 8 wt.% of aluminum as dissolved hydrocarbylaluminum and methylaluminoxane species, and wherein for each mole part of aluminum in the solution there is in the solution in the range of 0.10 to 0.63 mole part of trimethylaluminum;
(b) the reaction solution formed in (a) is continuously degassed;
(c) the degassed solution is continuously flashed to form an overhead consisting essentially of 0.5 to 8 wt.% of aluminum as trimethylaluminum dissolved in organic solvent, and bottoms consisting essentially of 4 to 20 wt. % of aluminum as methylaluminoxane and trimethylaluminum, and wherein for each mole part of aluminum in solution in said bottoms, there is in the range of no more than 0.03 to 0.3 mole part of trimethylaluminum; and
(d) at least a portion of the overhead of (c) is recycled as a portion of the feed in (a).

8. A process according to Claim 7 wherein makeup trimethylaluminum and makeup inert solvent are included in the feed in (a).

9. A process according to Claim 8 wherein trimethylaluminum and inert solvent of the feed of (a) are made up of the recycle from (d) and said makeup trimethylaluminum and said makeup inert solvent.

10. A process according to Claim 9 wherein the makeup trimethylaluminum is combined with the recycle from (d) before being fed in (a).

11. A process according to Claim 9 wherein the makeup trimethylaluminum and a portion of the makeup inert solvent are combined with the recycle from (d) before being fed in (a).

12. A process according to Claim 9 wherein the water and a portion of the inert solvent of the feed of (a) are mixed together before being fed in (a).

13. A process according to Claim 9 wherein the makeup trimethylaluminum and a portion of the makeup inert solvent are combined with the recycle from (d) before being fed in (a), and wherein the water and another makeup portion of the inert solvent of the feed of (a) are mixed together before being fed in (a) .

14. A process according to Claim 7 wherein the solvent consists essentially of one or a mixture of inert hydrocarbons.

15. A process according to Claim 7 wherein the solvent consists essentially of toluene.

16. A process according to Claim 7 wherein the reactor is a loop reactor.

17. A process according to Claim .7 wherein in (d) essentially the entire overhead of (c) is continuously recycled to form a part of the feed of (a).

18. A process according to Claim 7 wherein the solvent consists essentially of one or a mixture of liquid inert hydrocarbons that has a boiling point or range below 250°C; wherein the bottoms of (c) are fed to the top of a counter-current stripper column and wherein one or mixture of inert hydrocarbons that has a boiling point or range below 250° is fed into the bottom of said stripper column such that the stripper column yields (i) an overhead consisting essentially of trimethylaluminum and one or a mixture of inert hydrocarbons that has a boiling point or range below 250°C, and (ii) bottoms consisting essentially of methylaluminoxane, trimethylaluminum and one or a mixture of inert hydrocarbons that has a boiling point or range below 250°C, and wherein the overhead from said stripper column, and the overhead of (c) are recycled in (d) to form a part of the feed of (a).

19. A process according to Claim 18 wherein the reactor is a loop reactor.

20. A process according to Claim 19 wherein said one or a mixture of inert hydrocarbons in both cases is essentially entirely composed of toluene.

21. A process according to Claim 7 wherein the solvent consists essentially of one or a mixture of inert hydrocarbons that has a boiling point or range below 250°C; wherein the bottoms of (c) are fed to a wiped film evaporator to separate the bottoms into (i) an overhead consisting essentially of trimethylaluminum and one or a mixture of inert hydrocarbons that has a boiling point or range below 250°C, and (ii) bottoms consisting essentially of methylaluminoxane, trimethylaluminum and one or a mixture of inert hydrocarbons that has a boiling point or range below 250°C; and wherein the overhead from said wiped film evaporator, and the overhead of (c) are recycled in (d) to form a part of the feed of (a).

22. A process according to Claim 21 wherein the reactor is a loop reactor.

23. A process according to Claim 22 wherein said one or a mixture of inert hydrocarbons in both cases is essentially entirely composed of toluene.

24. A process according to Claim 7 wherein said temperature conditions and proportions in (a) are such that for each mole part of aluminum in said solution of (a) there is in said solution of (a) in the range of 0.16 to 0.63 mole part of trimethylaluminum; and wherein for each mole part of aluminum in solution in the bottoms from the continuous flashing in (c), said solution contains in the range of no more than 0.05 to 0.20 mole part of trimethylaluminum.

25. A process according to Claim 7 wherein the solution formed in (a) also contains finely-divided aluminum-containing solids, the aluminum content of said solids being not more than 10% of the total weight of aluminum in said dissolved hydrocarbylaluminum and methylaluminoxane species, and in said aluminum-containing solds; and wherein said aluminum-containing solids are continuously removed from the reaction solution formed in (a).

26. A process according to Claim 25 wherein said temperature conditions and proportions in (a) are such that for each mole part of aluminum in said solution of (a) there is in said solution of (a) in the range of 0.16 to 0.63 mole part of trimethylaluminum; and wherein for each mole part of aluminum in solution in the bottoms from the continuous flashing in (c), said solution contains in the range of no more than 0.05 to 0.20 mole part of trimethylaluminum.

27. A process according to Claim 26 wherein the reactor is a continuous loop reactor, and wherein the inert solvent in (a) and (c) is one or a mixture of inert liquid hydrocarbons that has a boiling point or range below 250°C.

28. A process according to any of claims 3 to 27 taken individually wherein the hydrocarbylaluminum is fed to the reactor as a solution in an organic solvent, and wherein the water is fed through an orifice which is surrounded by a flow of organic solvent which carries said water into said solvent solution of hydrocarbylaluminum and/or aluminoxane.

29. A process according to Claim 28 wherein said water is fed through a first conduit which is surrounded by a second conduit which contains a flow of said solvent, the outlet of said first conduit being recessed from the outlet end of said second conduit.

30. A process according to Claim 29 wherein the outlet end of said first conduit is recessed at least about 1 mm from the outlet. end of said second conduit.

31. A process according to Claim 28 wherein the ratio of the weight of said flow of solvent to the weight of water is from 10 to 1 to 1000 to 1.

32. A process according to Claim 31 wherein the ratio of the weight of said flow of solvent to the weight of water is from 25 to 250 to 1.

33. A process according to Claim 28 wherein said hydrocarbylaluminum compound is trimethylaluminum and said aluminoxane composition is a methylaluminoxane.

34. A process for making aluminoxane compositions by the addition of water to a solvent solution comprising a hydrocarbylaluminum compound and/or an aluminoxane in an organic solvent, said process comprising feeding said water through an orifice which is surrounded by a flow of solvent which carries said water into said solvent solution of hydrocarbylaluminum and/or aluminoxane.

35. The process of Claim 34 wherein said water is fed through a first conduit which is surrounded by a second conduit which contains a flow of said solvent, the outlet of said first conduit being recessed from the outlet end of said second conduit.

36. The process of Claim 35 wherein the outlet end of said first conduit is recessed at least about 1 mm from the outlet end of said second conduit.

37. The process of Claim 34 wherein the ratio of the weight of said flow of solvent to the weight of water is from 10 to 1 to 1000 to 1.

38. The process of Claim 37 wherein the rate of the weight of said flow of solvent to the weight of water is from 25 to 1 to 250 to 1.

39. The process of Claim 34 wherein said hydrocarbylaluminum compound is trimethylaluminum and said aluminoxane composition is a methylaluminoxane.

## Patentansprüche

1. Verfahren, bei dem Trimethylaluminium, Wasser und organisches Lösungsmittel zur Bildung von Methylaluminoxan in einen Reaktor eingeführt werden, wobei bei diesem Verfahren (a) diese Materialien dem Reaktor unter Temperaturbedingungen und in Anteilen zugeführt werden, die eine Lösung bilden, die im Bereich von 0,5 bis 15 Gew.% Aluminium als Trimethylaluminium und Methylaluminoxan enthält, und wobei sich für jeden Molteil Aluminium in der Lösung 0,1 bis 0,9 Molteile Trimethylaluminium befinden, wobei das Trimethylaluminium und das Wasser kombiniert werden, um 2,0 bis 5,0 Mole Trimethylaluminium pro Mol Wasser zu liefern, und (b) die Lösung in einen ersten Anteil, der im Wesentlichen aus 0,5 bis 15 Gew.% Aluminium als Trimethylaluminium in organischem Lösungsmittel gelöst besteht, und einen zweiten Anteil getrennt wird, der im Wesentlichen aus 3 bis 20 Gew.% Gesamtaluminium als Methylaluminoxan und Trimethylaluminium besteht, und wobei auf jeden Molteil Aluminium in Lösung in dem zweiten Anteil Trimethylaluminium im Bereich von nicht mehr als 0,03 bis 0,3 Molteilen vorhanden ist.

2. Verfahren nach Anspruch 1, bei dem ferner mindestens ein Teil des ersten Anteils in den Reaktor zurückgeführt wird.

3. Verfahren, bei dem Kohlenwasserstoffaluminium, Wasser und organisches Lösungsmittel zur Bildung von Kohlenwasserstoffaluminoxan in einen Reaktor eingeführt werden, wobei bei diesem Verfahren (a) diese Materialien dem Reaktor unter Temperaturbedingungen und in Anteilen zugeführt werden, die eine Lösung bilden, die im Bereich von 0,5 bis 15 Gew.% Aluminium als Kohlenwasserstoffaluminium und Kohlenwasserstoffaluminoxan enthält, und wobei sich für jeden Molteil Aluminium in der Lösung 0,1 bis 0,9 Molteile Kohlenwasserstoffaluminium befinden, und (b) die Lösung in einen ersten Anteil, der im Wesentlichen aus 0,5 bis 15 Gew.% Aluminium als Kohlenwasserstoffaluminium in organischem Lösungsmittel gelöst besteht, und einen zweiten Anteil getrennt wird, der im Wesentlichen aus 3 bis 20 Gew.% Gesamtaluminium als Kohlenwasserstoffaluminoxan und Kohlenwasserstoffaluminium besteht, und wobei auf jeden Molteil Aluminium in Lösung in dem zweiten Anteil Kohlenwasserstoffaluminium im Bereich von nicht mehr als 0,03 bis 0,3 Molteilen vorhanden ist, und bei dem (a) und (b) auf kontinuierlicher Basis durchgeführt werden.

4. Verfahren nach Anspruch 3, bei dem ferner kontinuierlich mindestens ein Teil des ersten Anteils in den Reaktor zurückgeführt wird.

5. Verfahren nach Anspruch 3, bei dem die Abtrennung von (b) durch kontinuierliches Abziehen oder Destillation erfolgt.

6. Verfahren nach Anspruch 3, bei dem das Kohlenwasserstoffaluminium Trimethylaluminium ist und das Aluminoxan Methyl-aluminoxan ist.

7. Verfahren nach Anspruch 6, bei dem
(a) das Trimethylaluminium, das Wasser und das organische Lösungsmittel kontinuierlich unter Temperaturbedingungen und in Anteilen in den Reaktor eingeführt werden, die eine Lösung bilden, die insgesamt im Bereich von 0,5 bis 8 Gew.% Aluminium als gelöste Kohlenwasserstoffaluminium- und Methylaluminoxanspezies enthält, und wobei für jeden Molteil Aluminium in der Lösung Trimethylaluminium im Bereich von 0,10 bis 0,63 Molteilen in der Lösung vorhanden ist,
(b) die in (a) gebildete Reaktionslösung kontinuierlich entgast wird,
(c) die entgaste Lösung kontinuierlich abgezogen wird, um ein Kopfprodukt zu bilden, das im Wesentlichen aus 0,5 bis 8 Gew.% Aluminium als in organischem Lösungsmittel gelöstes Trimethylaluminium sowie Bodenprodukten besteht, die im Wesentlichen aus 4 bis 20 Gew.% Aluminium als Methylaluminoxan und Trimethylaluminium bestehen, und wobei auf jeden Molteil Aluminium in Lösung in den Bodenprodukten Trimethylaluminium im Bereich von nicht mehr als 0,03 bis 0,3 Molteilen vorhanden ist, und
(d) mindestens ein Teil des Kopfprodukts von (c) als Teil des Einsatzmaterials in (a) zurückgeführt wird.

8. Verfahren nach Anspruch 7, bei dem dem Einsatzmaterial in (a) frisches Trimethylaluminium und frisches inertes Lösungsmittel zugefügt werden.

9. Verfahren nach Anspruch 8, bei dem Trimethylaluminium und inertes Lösungsmittel des Einsatzmaterials von (a) durch den Rückführungsstrom aus (d) und das frische Trimethylaluminium und frische inerte Lösungsmittel gebildet werden.

10. Verfahren nach Anspruch 9, bei dem das frische Trimethylaluminium vor dem Einführen in (a) mit dem Rückführungsstrom aus (d) kombiniert wird.

11. Verfahren nach Anspruch 9, bei dem das frische Trimethylaluminium und ein Teil des frischen inerten Lösungsmittels vor dem Einführen in (a) mit dem Rückführungsstrom aus (d) kombiniert werden.

12. Verfahren nach Anspruch 9, bei dem das Wasser und ein Teil des inerten Lösungsmittels des Einsatzmaterials von (a) vor dem Einführen in (a) miteinander gemischt werden.

13. Verfahren nach Anspruch 9, bei dem das frische Trimethylaluminium und ein Teil des frischen inerten Lösungsmittels vor den Einführen in (a) mit dem Rückführungsstrom aus (d) kombiniert werden, und wobei das Wasser und ein weiterer frischer Anteil des inerten Lösungsmittels des Einsatzmaterials von (a) vor dem Einführen in (a) miteinander gemischt werden.

14. Verfahren nach Anspruch 7, bei dem das Lösungsmittel im Wesentlichen aus einem oder einer Mischung inerter Kohlenwasserstoffe besteht.

15. Verfahren nach Anspruch 7, bei dem das Lösungsmittel im Wesentlichen aus Toluol besteht.

16. Verfahren nach Anspruch 7, bei dem der Reaktor ein Schleifenreaktor ist.

17. Verfahren nach Anspruch 7, bei dem in (d) im Wesentlichen das gesamte Kopfprodukt aus (c) kontinuierlich zurückgeführt wird, um einen Teil des Einsatzmaterials für (a) zu bilden.

18. Verfahren nach Anspruch 7, bei dem das Lösungsmittel im Wesentlichen aus einem oder einer Mischung flüssiger inerter Kohlenwasserstoffe mit einem Siedepunkt oder -bereich unter 250°C besteht, wobei die Bodenprodukte von (c) in den oberen Bereich einer Gegenstrom-Stripperkolonne eingeführt werden und ein oder eine Mischung inerter Kohlenwasserstoffe mit einem Siedepunkt oder -bereich unter 250°C in den Boden der Stripperkolonne eingeführt wird, so dass die Stripperkolonne (i) Kopfprodukt, das im Wesentlichen aus Trimethylaluminium und einem oder einer Mischung inerter Kohlenwasserstoffe mit einem Siedepunkt oder -bereich unter 250°C und (ii) Bodenprodukte ergibt, die im Wesentlichen aus Methylaluminoxan, Trimethylaluminium und einem oder einer Mischung inerter Kohlenwasserstoffe mit einem Siedepunkt oder -bereich unter 250°C bestehen, wobei das Kopfprodukt aus der Stripperkolonne und das Kopfprodukt von (c) in (d) zurückgeführt werden, um einen Teil des Einsatzmaterials für (a) zu bilden.

19. Verfahren nach Anspruch 18, bei dem der Reaktor ein Schleifenreaktor ist.

20. Verfahren nach Anspruch 19, bei dem der eine oder die Mischung inerter Kohlenwasserstoffe in beiden Fällen im Wesentlichen vollständig aus Toluol zusammengesetzt ist.

21. Verfahren nach Anspruch 7, bei dem das Lösungsmittel im Wesentlichen aus einem oder einer Mischung inerter Kohlenwasserstoffe mit einem Siedepunkt oder -bereich unter 250°C besteht, wobei die Bodenprodukte von (c) in einen Fraktionierbürstenverdampfer eingeführt werden, um die Bodenprodukte in (i) Kopfprodukt, das im Wesentlichen aus Trimethylaluminium und einem oder einer Mischung inerter Kohlenwasserstoffe mit einem Siedepunkt oder -bereich unter 250°C und (ii) Bodenprodukte zu trennen, die im Wesentlichen aus Methylaluminoxan, Trimethylaluminium und einem oder einer Mischung inerter Kohlenwasserstoffe mit einem Siedepunkt oder -bereich unter 250°C bestehen, wobei das Kopfprodukt aus dem Fraktionierbürstenverdampfer und das Kopfprodukt von (c) in (d) zurückgeführt werden, um einen Teil des Einsatzmaterials für (a) zu bilden.

22. Verfahren nach Anspruch 21, bei dem der Reaktor ein Schleifenreaktor ist.

23. Verfahren nach Anspruch 22, bei dem der eine oder die Mischung inerter Kohlenwasserstoffe in beiden Fällen im Wesentlichen vollständig aus Toluol zusammengesetzt ist.

24. Verfahren nach Anspruch 7, bei dem die Temperaturbedingungen und Anteile in (a) derart sind, dass auf jeden Molteil Aluminium in der Lösung von (a) Trimethylaluminium im Bereich von 0,16 bis 0,63 Molteilen in der Lösung von (a) vorhanden ist, und wobei auf jeden Molteil Aluminium in Lösung in den Bodenprodukten aus dem kontinuierlichen Abziehen in (c) die Lösung Trimethylaluminium im Bereich von nicht mehr als 0,05 bis 0,20 Molteilen enthält.

25. Verfahren nach Anspruch 7, bei dem die in (a) gebildete Lösung auch feinteilige aluminiumhaltige Feststoffe enthält, wobei der Aluminiumgehalt der Feststoffe nicht mehr als 10 % des Gesamtgewichts des Aluminiums in den gelösten Kohlenwasserstoffaluminium- und Methylaluminoxanspezies und den aluminiumhaltigen Feststoffen beträgt, und wobei die aluminiumhaltigen Feststoffe kontinuierlich aus der in (a) gebildeten Reaktionslösung entfernt werden.

26. Verfahren nach Anspruch 25, bei dem die Temperaturbedingungen und Anteile in (a) derart sind, dass auf jeden Molteil Aluminium in der Lösung von (a) Trimethylaluminium im Bereich von 0,16 bis 0,63 Molteilen in der Lösung von (a) vorhanden ist, und wobei auf jeden Molteil Aluminium in Lösung in den Bodenprodukten aus dem kontinuierlichen Abziehen in (c) die Lösung Trimethylaluminium im Bereich von nicht mehr als 0,05 bis 0,20 Molteilen enthält.

27. Verfahren nach Anspruch 26, bei dem der Reaktor ein kontinuierlicher Schleifenreaktor ist und das inerte Lösungsmittel in (a) und (c) ein oder eine Mischung inerter flüssiger Kohlenwasserstoffe mit einem Siedepunkt oder -bereich unter 250°C ist.

28. Verfahren nach einem der Ansprüche 3 bis 27, bei dem das Kohlenwasserstoffaluminium als Lösung in organischem Lösungsmittel in den Reaktor eingeführt wird und das Wasser durch eine enge Öffnung eingeführt wird, die von einem Strom aus organischem Lösungsmittel umgeben ist, das das Wasser in die Lösungsmittellösung von Kohlenwasserstoffaluminium und/oder -aluminoxan trägt.

29. Verfahren nach Anspruch 28, bei dem das Wasser durch eine erste Rohrleitung eingeführt wird, die von einer zweiten Rohrleitung umgeben ist, die einen Strom des Lösungsmittels enthält, wobei der Auslass der ersten Rohrleitung gegenüber dem Auslassende der zweiten Rohrleitung zurückgesetzt ist.

30. Verfahren nach Anspruch 29, bei dem das Auslassende der ersten Rohrleitung mindestens etwa 1 mm von dem Auslassende der zweiten Rohrleitung zurückgesetzt ist.

31. Verfahren nach Anspruch 28, bei dem das Verhältnis des Gewichts des Lösungsmittelstroms zu dem Gewicht des Wassers 10:1 bis 1000:1 beträgt.

32. Verfahren nach Anspruch 31, bei dem das Verhältnis des Gewichts des Lösungsmittelstroms zu dem Gewicht des Wassers 25 bis 250:1 beträgt.

33. Verfahren nach Anspruch 28, bei dem die Kohlenwasserstoffaluminiumverbindung Trimethylaluminium ist und die Aluminoxanzusammensetzung Methylaluminoxan ist.

34. Verfahren zur Herstellung von Aluminoxanzusammensetzungen durch Zugabe von Wasser zu Lösungsmittellösung, die Kohlenwasserstoffaluminiumverbindung und/oder Aluminoxan in organischem Lösungsmittel umfasst, bei dem das Wasser durch eine enge Öffnung eingeführt wird, die von einem Lösungsmittelstrom umgeben ist, der das Wasser in die Lösungsmittellösung von Kohlenwasserstoffaluminium und/oder Aluminoxan trägt.

35. Verfahren nach Anspruch 34, bei dem das Wasser durch eine erste Rohrleitung eingeführt wird, die von einer zweiten Rohrleitung umgeben ist, die einen Strom des Lösungsmittels enthält, wobei der Auslass der ersten Rohrleitung gegenüber dem Auslass der zweiten Rohrleitung zurückgesetzt ist.

36. Verfahren nach Anspruch 35, bei dem das Auslassende der ersten Rohrleitung mindestens etwa 1 mm von dem Auslassende der zweiten Rohrleitung zurückgesetzt ist.

37. Verfahren nach Anspruch 34, bei dem das Verhältnis des Gewichts des Lösungsmittelstroms zu dem Gewicht des Wassers 10:1 bis 1000:1 beträgt.

38. Verfahren nach Anspruch 37, bei dem das Verhältnis des Gewichts des Lösungsmittelstroms zu dem Gewicht des Wassers 25:1 bis 250:1 beträgt.

39. Verfahren nach Anspruch 34, bei dem die Kohlenwasserstoffaluminiumverbindung Trimethylaluminium ist und die Aluminoxanzusammensetzung Methylaluminoxan ist.

## Revendications

1. Procédé dans lequel du triméthylaluminium, de l'eau et un solvant organique sont fournis à un réacteur pour former du méthylaluminoxane, ledit procédé comprenant (a) une fourniture de telles matières au réacteur dans des conditions de température et dans des proportions qui forment une solution contenant de 0,5 à 15 % en poids d'aluminium sous forme de triméthylaluminium et de méthylaluminoxane, et dans lequel pour chaque partie molaire d'aluminium dans la solution, il y a dans la solution, de 0,1 à 0,9 partie molaire de triméthylaluminium, ledit triméthylaluminium et ladite eau étant associés selon des proportions appropriées pour procurer de 2,0 à 5,0 moles de triméthylaluminium par mole d'eau ; et (b) une séparation de la solution en une première partie consistant essentiellement en 0,5 à 15 % en poids d'aluminium sous forme de triméthylaluminium dissous dans le solvant organique, et une deuxième partie consistant essentiellement en 3 à 20 % en poids d'aluminium total sous forme de méthylaluminoxane et de triméthylaluminium, et dans lequel pour chaque partie molaire d'aluminium en solution dans ladite deuxième partie, il n'y a pas plus de 0,03 à 0,3 partie molaire de triméthylaluminium.

2. Procédé selon la revendication 1, comprenant en outre un recyclage d'au moins une partie de ladite première partie au réacteur.

3. Procédé dans lequel un hydrocarbylaluminium, de l'eau et un solvant organique sont fournis à un réacteur pour former un hydrocarbylaluminoxane, ledit procédé comprenant (a) une fourniture de telles matières au réacteur dans des conditions de température et dans des proportions qui forment une solution contenant de 0,5 à 15 % en poids d'aluminium sous forme d'hydrocarbylaluminium et d'hydrocarbylaluminoxane, et dans lequel pour chaque partie molaire d'aluminium dans la solution, il y a dans la solution, de 0,1 à 0,9 partie molaire d'hydrocarbylaluminium ; et (b) une séparation de la solution en une première partie consistant essentiellement en 0,5 à 15 % en poids d'aluminium sous forme d'hydrocarbylaluminium dissous dans le solvant organique, et une deuxième partie consistant essentiellement en 3 à 20 % en poids d'aluminium total sous forme d'hydrocarbylaluminoxane et d'hydrocarbylaluminium, et dans lequel pour chaque partie molaire d'aluminium en solution dans ladite deuxième partie, il n'y a pas plus de 0,03 à 0,3 partie molaire d'hydrocarbylaluminium, et dans lequel les étapes (a) et (b) sont effectuées de manière continue.

4. Procédé selon la revendication 3, comprenant en outre un recyclage continu d'au moins une partie de ladite première partie au réacteur.

5. Procédé selon la revendication 3, dans lequel la séparation de l'étape (b) est effectuée par distillation par détente ou distillation continue.

6. Procédé selon la revendication 3, dans lequel l'hydrocarbylaluminium est le triméthylaluminium et l'aluminoxane et le méthylaluminoxane.

7. Procédé selon la revendication 6, dans lequel :
(a) le triméthylaluminium, l'eau et le solvant organique, sont fournis de manière continue à un réacteur dans des conditions de température et dans des proportions qui forment une solution contenant une totalité de 0,5 à 8 % en poids d'aluminium sous forme d'espèces de types hydrocarbylaluminium et méthylaluminoxane dissoutes, et dans lequel pour chaque partie molaire d'aluminium dans la solution, il y a dans la solution, de 0,10 à 0,63 partie molaire de triméthylaluminium ;
(b) la solution réactionnelle formée dans l'étape (a) est dégazée de manière continue ;
(c) la solution dégazée est soumise à une distillation par détente de manière continue pour former une fraction de tête consistant essentiellement en 0,5 à 8 % en poids d'aluminium sous forme de triméthylaluminium dissous dans un solvant organique, et une fraction de queue consistant essentiellement en 4 à 20 % en poids d'aluminium sous forme de méthylaluminoxane et de triméthylaluminium, et dans lequel pour chaque partie molaire d'aluminium en solution dans ladite fraction de queue, il n'y a pas plus de 0,03 à 0,3 partie molaire de triméthylaluminium ; et
(d) au moins une partie de la fraction de tête de l'étape (c) est recyclée sous forme d'une partie de la charge d'alimentation dans l'étape (a).

8. Procédé selon la revendication 7, dans lequel du triméthylalumium d'appoint et un solvant inerte d'appoint sont inclus dans la charge d'alimentation dans l'étape (a).

9. Procédé selon la revendication 8, dans lequel du triméthylaluminium et un solvant inerte de la charge d'alimentation de l'étape (a) sont constitués du produit de recyclage de l'étape (d) de même que dudit triméthylaluminium d'appoint et dudit solvant inerte d'appoint.

10. Procédé selon la revendication 9, dans lequel le triméthylaluminium d'appoint est combiné avec le produit de recyclage de l'étape (d) avant d'être fourni dans l'étape (a).

11. Procédé selon la revendication 9, dans lequel le triméthylaluminium d'appoint et une partie du solvant inerte d'appoint sont combinés avec le produit de recyclage issu de l'étape (d) avant d'être fournis dans l'étape (a).

12. Procédé selon la revendication 9, dans lequel l'eau et une partie du solvant inerte de la charge d'alimentation de l'étape (a) sont mélangées ensemble avant d'être fournies dans l'étape (a).

13. Procédé selon la revendication 9, dans lequel le triméthylaluminium d'appoint et une partie du solvant inerte d'appoint sont combinés avec le produit de recyclage issu de l'étape (d) avant d'être fournis dans l'étape (a), et dans lequel l'eau et une autre partie d'appoint du solvant inerte de la charge d'alimentation de l'étape (a) sont mélangées ensemble avant d'être fournies dans l'étape (a).

14. Procédé selon la revendication 7, dans lequel le solvant consiste essentiellement en un ou un mélange d'hydrocarbures inertes.

15. Procédé selon la revendication 7, dans lequel le solvant consiste essentiellement en toluène.

16. Procédé selon la revendication 7, dans lequel le réacteur est un réacteur à boucle.

17. Procédé selon la revendication 7, dans lequel dans l'étape (d) presque la totalité de la fraction de tête de l'étape (c) est recyclée de manière continue pour former une partie de la charge d'alimentation de l'étape (a).

18. Procédé selon la revendication 7, dans lequel le solvant consiste essentiellement en un ou un mélange d'hydrocarbures liquides inertes ayant un point ou une plage d'ébullition inférieur à 250 °C ; dans lequel la fraction de queue de l'étape (c) est fournie au sommet d'une colonne de fractionnement à contre-courant et dans lequel un ou un mélange d'hydrocarbures inertes ayant une plage ou un point d'ébullition inférieur à 250 °C, est fourni au fond de ladite colonne de fractionnement de telle façon que la colonne de fractionnement procure (i) une fraction de tête consistant essentiellement en triméthylaluminium, et en un ou un mélange d'hydrocarbures inertes ayant un point ou une plage d'ébullition inférieur à 250 °C, et (ii) une fraction de queue consistant essentiellement en méthylaluminoxane, en triméthylaluminium et en un ou un mélange d'hydrocarbures inertes ayant un point ou une plage d'ébullition inférieur à 250 °C, et dans lequel la fraction de tête issue de ladite colonne de fractionnement, et la fraction de tête de l'étape (c), sont recyclées dans l'étape (d) pour former une partie de la charge d'alimentation de l'étape (a).

19. Procédé selon la revendication 18, dans lequel le réacteur est un réacteur à boucle.

20. Procédé selon la revendication 19, dans lequel le ou lesdits hydrocarbures inertes sont, dans les deux cas, presque entièrement constitués de toluène.

21. Procédé selon la revendication 7, dans lequel le solvant consiste essentiellement en un ou un mélange d'hydrocarbures inertes ayant un point ou une plage d'ébullition inférieur à 250 °C ; dans lequel la fraction de queue de l'étape (c) est introduite dans un évaporateur à film balayé pour séparer la fraction de queue en (i) une fraction de tête consistant essentiellement en triméthylaluminium et en un ou un mélange d'hydrocarbures inertes ayant un point ou une plage d'ébullition inférieur à 250 °C, et (ii) une fraction de queue consistant essentiellement en méthylaluminoxane, en triméthylaluminium et en un ou un mélange d'hydrocarbures inertes ayant un point ou une plage d'ébullition inférieur à 250 °C ; et dans lequel la fraction de tête issue dudit évaporateur à film balayé, et la fraction de tête issue de l'étape (c) sont recyclées dans l'étape (d) pour former une partie de la charge d'alimentation de la charge (a).

22. Procédé selon la revendication 21, dans lequel le réacteur est un réacteur à boucle.

23. Procédé selon la revendication 22, dans lequel le ou lesdits hydrocarbures inertes sont dans les deux cas presque entièrement constitués en toluène.

24. Procédé selon la revendication 7, dans lequel lesdites conditions de température et proportions dans l'étape (a) sont telles que pour chaque partie molaire d'aluminium dans ladite solution de l'étape (a), il y a dans ladite solution de l'étape (a) de 0,16 à 0,63 partie molaire de triméthylaluminium ; et dans lequel pour chaque partie molaire d'aluminium en solution dans ladite fraction de queue issue de la distillation par détente continue dans l'étape (c), ladite solution ne contient pas plus de 0,05 à 0,20 partie molaire de triméthylaluminium.

25. Procédé selon la revendication 7, dans lequel la solution formée dans l'étape (a) contient également des solides contenant de l'aluminium finement divisés, la teneur en aluminium desdits solides n'étant pas supérieure à 10 % du poids total d'aluminium dans lesdites espèces de types hydrocarbylaluminium et méthylaluminoxane dissoutes, et dans lesdits solides contenant de l'aluminium ; et dans lequel lesdits solides contenant de l'aluminium, sont éliminés de manière continue de la solution réactionnelle formée dans l'étape (a).

26. Procédé selon la revendication 25, dans lequel lesdites conditions de température et proportions dans l'étape (a), sont telles que pour chaque partie molaire d'aluminium dans ladite solution de l'étape (a), il y a dans ladite solution de l'étape (a) de 0,16 à 0,63 partie molaire de triméthylaluminium ; et dans lequel pour chaque partie molaire d'aluminium en solution dans la fraction de queue issue de la distillation par détente continue de l'étape (c), ladite solution ne contient pas plus de 0,05 à 0,20 partie molaire de triméthylaluminium.

27. Procédé selon la revendication 26, dans lequel le réacteur est un réacteur à boucle continue, et dans lequel le solvant inerte dans les étapes (a) et (c) est un ou un mélange d'hydrocarbures liquides inertes ayant un point ou une plage d'ébullition inférieur à 250 °C.

28. Procédé selon l'une quelconque des revendications 3 à 27 considérées individuellement, dans lequel l'hydrocarbylaluminium est fourni au réacteur sous forme d'une solution dans un solvant organique et dans lequel l'eau est fournie à travers un orifice qui est entouré par un courant de solvant organique qui transporte ladite eau dans ladite solution à base de solvant d'hydrocarbylaluminium et/ou d'aluminoxane.

29. Procédé selon la revendication 28, dans lequel ladite eau est fournie à travers un premier conduit qui est entouré par un deuxième conduit qui contient un courant dudit solvant, l'orifice de sortie dudit premier conduit étant en retrait par rapport à l'extrémité de sortie dudit deuxième conduit.

30. Procédé selon la revendication 29, dans lequel l'extrémité de sortie dudit premier conduit est en retrait d'au moins environ 1 mm à partir de l'extrémité de sortie dudit deuxième conduit.

31. Procédé selon la revendication 28, dans lequel le rapport du poids dudit courant de solvant au poids d'eau est de 10 à 1 jusqu'à 1 000 à 1.

32. Procédé selon la revendication 31, dans lequel le rapport du poids dudit courant de solvant au poids d'eau est de 25 à 1 jusqu'à 250 à 1.

33. Procédé selon la revendication 28, dans lequel ledit composé de type hydrocarbylaluminium est le triméthylaluminium, et ladite composition à base d'aluminoxane est un méthylaluminoxane.

34. Procédé de préparation de compositions à base d'aluminoxane par addition d'eau dans une solution à base de solvant, comprenant un composé de type hydrocarbylaluminium et/ou un aluminoxane dans un solvant organique, ledit procédé comprenant la fourniture de ladite eau à travers un orifice qui est entouré par un courant de solvant qui transporte ladite eau dans ladite solution à base de solvant d'hydrocarbylaluminium et/ou d'aluminoxane.

35. Procédé selon la revendication 34, dans lequel ladite eau est fournie à travers un premier conduit qui est entouré par un deuxième conduit contenant un courant dudit solvant, l'orifice de sortie dudit premier conduit étant en retrait par rapport à l'extrémité de sortie dudit deuxième conduit.

36. Procédé selon la revendication 35, dans lequel l'extrémité de sortie dudit premier conduit est en retrait d'au moins environ 1 mm à partir de l'extrémité de sortie dudit deuxième conduit.

37. Procédé selon la revendication 34, dans lequel le rapport du poids dudit courant de solvant au poids d'eau, est de 10 à 1 jusqu'à 1 000 à 1.

38. Procédé selon la revendication 37, dans lequel le rapport du poids dudit courant de solvant au poids d'eau, est de 25 à 1 jusqu'à 250 à 1.

39. Procédé selon la revendication 34, dans lequel ledit composé de type hydrocarbylaluminium est le triméthylaluminium, et ladite composition à base d'aluminoxane est un méthylaluminoxane.
